# EUROPÄISCHE PATENTSCHRIFT

(11) **EP 3 542 983 B1**
(45) Veröffentlichungstag und Bekanntmachung des Hinweises auf die Patenterteilung: **09.03.2022**
(21) Anmeldenummer: 19154467.5
(22) Anmeldetag: 30.01.2019
(51) Int. Cl.: B29C 41/06, B01D 35/027, B01D 35/147, B29C 69/00, E02F 9/08, F15B 1/26, B01D 29/23, B29C 65/06, B29C 65/08, B29C 65/16, B29C 65/00, B29D 22/00, B29C 65/02, B29C 45/00, B60T 11/26, B29K 105/00, B29K 77/00, B29K 105/12, B29L 31/00, B60T 17/06, F15B 21/044

(54) **VERFAHREN ZUR HERSTELLUNG EINES HYDRAULIKTANKS**
METHOD FOR PRODUCING A HYDRAULIC TANK
PROCÉDÉ DE FABRICATION D'UN RÉSERVOIR HYDRAULIQUE

(30) Priorität: 20.03.2018 DE 102018106491
(43) Veröffentlichungstag der Anmeldung: 25.09.2019
(73) Patentinhaber: ARGO-HYTOS Group AG, 6340 Baar (CH)
(72) Erfinder: Weiser, Thomas, 74889 Sinsheim (DE); Trunner, Daniel, 76703 Kraichtal (DE); Schleuter, Tanja, 67105 Schifferstadt (DE); Stech, Jörg, 74906 Bad Rappenau (DE)
(74) Vertreter: Kilchert, Jochen

(56) Entgegenhaltungen:
- EP-A2- 1 358 989
- WO-A1-2018/054474
- DE-A1- 19 955 635
- DE-A1-102008 052 492
- DE-A1-102010 004 650
- DE-A1-102010 049 974
- DE-A1-102013 222 908
- DE-A1-102014 106 998
- DE-B3-102018 106 499
- JP-B2- 5 493 172
- US-A1- 2006 249 947
- Otto Schwarz ET AL: "Kunststoffverarbeitung - Kapitel 13 Rotationsformen" In: "Kunststoffverarbeitung", 1. Januar 1997 (1997-01-01), Vogel, Würzburg, XP055609985, ISBN: 978-3-8023-1717-0 Seiten 181-181, * S. 181, Kapitel 13.2, Zeile 2-4 *
- K. O. Ogila ET AL: "Rotational molding: A review of the models and materials", eXPRESS Polymer Letters, vol. 11, no. 10, 1 January 2017 (2017-01-01), pages 778-798, XP055589859, ISSN: 1788-618X, DOI: 10.3144/expresspolymlett.2017.75

## Beschreibung

Die Erfindung betrifft ein Verfahren zum Herstellen eines Hydrauliktanks. Ein Verfahren zur Herstellung eines Hydrauliktanks ist beispielsweise aus DE 10 2013 222 908 A1 bekannt, bei dem das Tankgehäuse durch Rotationssintern hergestellt wird. Beim Rotationssintern wird ein Sinterpulver in ein Rotationswerkzeug eingefüllt und unter Wärmezufuhr durch Bewegung des Rotationswerkzeugs gleichmäßig an der Werkzeuginnenwand verteilt. Nach dem Versintern des Pulvers wird der Hydrauliktank entformt. Ein Auslassstutzen wird in herkömmlicher Weise an den Gehäusetank angeschweißt, wobei offengelassen ist, auf welche Weise das Anbauteil selbst hergestellt wird.

In DE 10 2010 049 974 A1 wird für die Herstellung des Tankgehäuses eines Hydrauliktanks ein Rotationsformverfahren vorgeschlagen. Das Tankgehäuse weist eine Anschlussöffnung auf, die von einem Anschlusselement durchgriffen wird. An das Anschlusselement kann eine Hydraulikleitung angeschlossen werden. Das Anschlusselement bildet einen Rohrstutzen aus, der mit dem Tankgehäuse verschraubt werden kann. Zu diesem Zweck ist an der Anschlussöffnung ein metallisches Einlegeteil in Form eines Gewindeeinsatzes festgelegt. Die Verwendung von Einlegeteilen oder auch Versteifungsteilen bei der Herstellung des Tankgehäuses im Rotationsformverfahren ist mit nicht unbeträchtlichen Kosten verbunden.

Der Erfindung liegt die Aufgabe zu Grunde, ein verbessertes Herstellungsverfahren für Hydrauliktanks anzugeben, das eine einfache und kostengünstige Herstellung qualitativ hochwertiger Hydrauliktanks auch bei relativ geringen Stückzahlen ermöglicht.

Erfindungsgemäß wird diese Aufgabe durch ein Verfahren nach dem Anspruch 1 gelöst.

Konkret wird die Aufgabe durch ein Verfahren zum Herstellen eines Hydrauliktanks aus Kunststoff gelöst, wobei der Hydrauliktank ein Tankgehäuse und wenigstens ein Anbauelement aufweist, das an dem Tankgehäuse befestigt ist. Bei dem Verfahren wird das Tankgehäuse durch Rotationsflüssigformen hergestellt. Alternativ wird ein durch Rotationsflüssigformen hergestelltes Tankgehäuse zur Weiterverarbeitung bereitgestellt. Bei dem Rotationsflüssigformen wird wenigstens ein flüssiges Ausgangsmaterial in ein Rotationswerkzeug eingebracht. Das Rotationswerkzeug wird zum Verteilen des flüssigen Ausgangsmaterials im Rotationswerkzeug bewegt. Nach dem Verfestigen des Ausgangsmaterials wird das Tankgehäuse entformt. Erfindungsgemäß umfasst das Anbauelement ein durch Spritzgießen hergestelltes Filtergehäuse oder das durch Spritzgießen hergestelltes Filtergehäuse wird bereitgestellt. Das spritzgegossene Filtergehäuse und das rotationsflüssiggeformte Tankgehäuse werden miteinander verbunden.

Dabei können mehrere flüssige Einzelkomponenten des Ausgangsmaterials bzw. mehrere flüssige Ausgangsmaterialien außerhalb des Rotationswerkzeuges gemischt und dann als Reaktionsgemisch in das Rotationswerkzeug eingebracht werden. Die Reaktion bzw. Polymerisation findet im Rotationswerkzeug statt. Alternativ ist es denkbar, mehrere flüssige Ausgangsmaterialien gesondert in das Rotationswerkzeug einzubringen und im Rotationswerkzeug zu einem Reaktionsgemisch zu mischen.

Bspw. kann ein flüssiges Reaktionsgemisch in ein vorgewärmtes Rotationswerkzeug eingebracht werden, das als Ausgangsmaterial eine Vorläuferverbindung aus wenigstens einem Aktivator und einem Katalysator enthält. Unmittelbar vor dem Einbringen des Gemisches in das vorgewärmte Rotationswerkzeug werden die Komponenten vermischt und dann eingebracht.

Das Rotationsflüssigformen führt zu Materialoberflächen mit einer hohen Güte, insbesondere zu glatten Materialoberflächen. Dieser Vorteil kommt besonders beim Verbinden des Tankgehäuses mit dem Anbauelement zum Tragen. Die Verbindungsfläche des Tankgehäuses, an der das Anbauelement im montierten Zustand anliegt, muss auf Grund der hohen Oberflächengüte nicht gesondert bearbeitet werden. Vielmehr wird das Anbauelement direkt nach der Herstellung des Tankgehäuses durch Rotationsflüssigformen mit dem Tankgehäuse verschweißt.

Dasselbe gilt für Dichtflächen, die ohne mechanische Bearbeitung unmittelbar genutzt werden können.

Die für das Rotationsflüssigformen erforderlichen Rotationswerkzeuge sind relativ kostengünstig. Damit sinken die Herstellungskosten und kleine Stückzahlen sind möglich.

Die Herstellung des Anbauelements erfolgt durch ein anderes Verfahren, nämlich durch Spritzgießen. Dadurch können Bauteile mit komplizierten Geometrien präzise realisiert werden. Die Herstellung des Anbauelements durch Spritzgießen hat den weiteren Vorteil, dass das Anbauelement als produktübergreifendes Bauelement konzipiert und so in größeren Stückzahlen produziert werden.

Die Erfindung hat ferner den Vorteil, dass eine einteilige Herstellung eines geschlossenen Tankgehäuses durch das Rotationsflüssigformen möglich ist. Im Unterschied zu anderen Prozessen fehlen bei einem rotationsflüssiggeformten Tankgehäuse Quetsch- oder Schweißnähte, die nachbearbeitet werden müssen. Das Tankgehäuse wird in einem Stück ohne Schweißnähte oder Verbindungen nahezu spannungsfrei hergestellt.

Die Erstarrungstemperatur des Materials ist beim Rotationsflüssigformen kleiner als dessen Schmelztemperatur. Dadurch werden Schwund und Verzug des Hydrauliktanks minimiert. Beim Rotationsflüssigformen werden bei atmosphärischem Druck nahezu spannungsfreie Tankgehäuse produziert, da die Flüssigkeit, während des Formungsprozesses und beim Aushärten praktisch keine Spannungen erfährt. Die Wandstärke des Tankgehäuses kann bei Bedarf ohne eine Änderung des Werkzeugs durch eine Anpassung der Prozessparameter und Menge des Ausgangsmaterials verändert werden.

Eine geeignete Prozeßtemperatur bspw. für die Verarbeitung von PA 6 kann durch Vortemperieren des Rotationswerkzeuges auf ca. 160° und durch Bewegen des Rotationswerkzeuges in einem Ofen mit ca. 200°-205° eingestellt werden. Die Abkühlung erfolgt auf ca. 70°.

Wie in DE 10 2014 106 998 A1 näher beschrieben, werden Thermoplaste mit hoher Schmelz- bzw. Erweichungstemperatur beim Rotationsflüssigformen so verarbeitet, dass ein chemischer Vorläufer des für das Tankgehäuse vorgesehenen Materials, der sogenannte Kunststoffvorläufer, als Schmelze in flüssiger Form in das Rotationswerkzeug eingebracht wird und dort unter Rotation bei gleichzeitiger Formgebung chemisch zum endgültigen Kunststoffwerkstoff polymerisiert.

Dieses Verfahren kommt z.B. zur Herstellung von Tankgehäusen aus Polyamid 6 (PA6), Polyamid 12 (PA12) oder ihren Co-Polymeren zum Einsatz. Als Kunststoffvorläufer werden die entsprechenden Lactame, also z.B. Caprolactam und/oder Laurinlactam, eingesetzt, die bei Raumtemperatur unter Normalbedingungen in fester Form vorliegen, beim Rotationsflüssigformen jedoch als Schmelze mit sehr niedriger Viskosität verarbeitet werden. Die Prozesstemperatur wird unterhalb der Schmelztemperatur des fertigen Kunststoffs gehalten. Dieses Verfahren kann bei dem kombinierten Flüssigform- und Spritzgussverfahren im Rahmen der Erfindung mit Blick auf das Rotationsflüssigformen verwendet werden. Andere Rotationsflüssigformverfahren sind im Rahmen der Erfindung möglich.

Das hergestellte Tankgehäuse besteht aus einem Kunststoffmaterial, das erst während der Formgebung im Rotationswerkzeug aus einem Kunststoffvorläufer gebildet wird, der im Rotationswerkzeug zunächst in flüssiger Form vorliegt.

Die Erfindung unterscheidet sich von der nachveröffentlichten Anmeldung Nummer PCT/EP2016/072611 dadurch, dass das Rotationsformen als Rotationsflüssigformen ausgeführt wird.

Bevorzugte Ausführungsformen der Erfindung sind im Anspruch 1 und in den Unteransprüchen angegeben.

Vorzugsweise umfasst das Anbauelement ein Anschlusselement mit einem Kunststoffkörper, der mit einer Hydraulikleitung verbindbar ist.

Dabei kann der Kunststoffkörper des Anschlusselements beim Spritzgießen als einteiliger Kunststoffkörper hergestellt sein. Das Anschlusselement kann eine hohe Maßgenauigkeit aufweisen und zeichnet sich durch eine hohe mechanische Belastbarkeit aus. An das Anschlusselement kann eine Hydraulikleitung angeschlossen werden, über die dem Tankgehäuse Hydraulikflüssigkeit zugeführt und/oder Hydraulikflüssigkeit dem Tankgehäuse entnommen werden kann.

Das Tankgehäuse kann im Rotationsflüssigformverfahren ohne metallische Teilkomponente hergestellt sein. Kostenintensive metallische Einlege oder Verstärkungsteile oder sonstige metallische Bauteile im Tankgehäuse können somit entfallen.

Insgesamt zeichnet sich der erfindungsgemäße Hydrauliktank, insbesondere bei kleinen bis mittleren Stückzahlen, durch ein sehr gutes Preis-Leistungsverhältnis unter Berücksichtigung der Investitionskosten und der gestalterischen Möglichkeiten zur Erzielung auch komplexer Geometrien aus.

Je nach Einsatzzweck des Hydrauliktanks kann das Tankgehäuse kostengünstig mit der jeweils gewünschten Geometrie hergestellt werden. Das Tankgehäuse kann hierbei je nach Bedarf eine gewünschte Anzahl von Anschlussöffnungen aufweisen, und an die Anschlussöffnungen kann jeweils ein vorgefertigtes Anschlusselement angeordnet werden, dessen Kunststoffkörper mit dem Tankgehäuse verschweißt wird. Die Anschlusselemente können in großer Stückzahl in Form modularer Bauteile hergestellt und bevorratet werden und können für unterschiedliche Tankgehäuse, die jeweils in einem Rotationsflüssigformverfahren hergestellt sind, eingesetzt werden.

Der Kunststoffkörper des mindestens einen Anschlusselements ist bevorzugt als einteiliges Bauteil im Spritzgießverfahren hergestellt. Der Kunststoffkörper muss bei einer derartigen Ausgestaltung nicht aus mehreren Bestandteilen zusammengefügt werden. Dies erlaubt eine weitere Kostenreduzierung.

Von Vorteil ist es, wenn das komplette Anschlusselement als im Spritzgießverfahren hergestellter Kunststoffkörper ohne metallische Teilkomponente ausgestaltet ist. Bei einer derartigen Ausgestaltung weist das Anschlusselement insbesondere kein metallisches Einlege oder Versteifungsteil auf und kann daher in seiner Gesamtheit kostengünstig im Spritzgießverfahren hergestellt werden.

Bei einer bevorzugten Ausführung des Verfahrens werden das Anbauelement, insbesondere das Anschlusselement und/oder das Filtergehäuse, einerseits und das Tankgehäuse andererseits durch ein Verbindungsverfahren aus der Gruppe Laserschweißen, Ultraschallschweißen, Rotationsschweißen, Vibrationsschweißen verbunden werden. Das Laserschweißen, Ultraschallschweißen und Rotationsschweißen kommen sowohl für das Anschlusselement und das Filtergehäuse in Frage. Das Vibrationsschweißen eignet sich besser zur Verbindung des Filtergehäuses.

Es kann vorgesehen sein, dass mindestens eine erste Anschlussöffnung des Tankgehäuses eine Tankeinlassöffnung ausbildet und dass mindestens eine zweite Anschlussöffnung des Tankgehäuses eine Tankauslassöffnung ausbildet. An der mindestens einen Tankeinlassöffnung und an der mindestens einen Tankauslassöffnung ist jeweils ein Anschlusselement angeordnet, das mit einer Hydraulikleitung lösbar verbindbar ist und dessen Kunststoffkörper mit dem Tankgehäuse verschweißt ist. Über die mindestens eine Tankeinlassöffnung und das an der Tankeinlassöffnung angeordnete und mit dem Tankgehäuse verschweißte Anschlusselement kann dem Tankgehäuse Hydraulikflüssigkeit zugeführt werden, und über die mindestens eine Tankauslassöffnung und das an der Tankauslassöffnung angeordnete und mit dem Tankgehäuse verschweißte Anschlusselement kann dem Tankgehäuse Hydraulikflüssigkeit entnommen werden. Die Anschlusselemente können identisch ausgestaltet sein.

Insbesondere können die Anschlusselemente als einteilige Kunststoffkörper vorzugsweise ohne metallische Teilkomponenten im Spritzgießverfahren hergestellt sein.

Das Tankgehäuse ist bei einer vorteilhaften Ausführungsform der Erfindung aus einem Polyamidmaterial im Rotationsflüssigformverfahren hergestellt.

Bei einer bevorzugten Ausführungsform ist das Tankgehäuse im Rotationsflüssigformverfahren aus einem faserverstärkten Polyamidmaterial hergestellt, insbesondere aus einem glasfaserverstärkten Polyamidmaterial.

Der Kunststoffkörper des Anschlusselements bzw. des Anbauelements ist bevorzugt aus einem faserverstärkten Kunststoffmaterial im Spritzgießverfahren hergestellt. Insbesondere kann vorgesehen sein, dass der Kunststoffkörper aus einem faserverstärkten Polyamidmaterial hergestellt ist, beispielsweise aus einem glasfaserverstärkten Polyamidmaterial.

Von Vorteil ist es, wenn das Anschlusselement einen Rohrstutzen ausbildet, der außenseitig eine Aufnahmestruktur für ein mit einer Hydraulikleitung lösbar verbindbares Schnellkupplungsteil aufweist. Derartige Schnellkupplungsteile sind dem Fachmann aus der EP 1 653 141 A1 bekannt. Mit ihrer Hilfe kann eine Hydraulikleitung auf sehr einfache Weise ohne Einsatz eines Spezialwerkzeuges flüssigkeitsdicht mit dem Anschlusselement verbunden werden. Die Aufnahmestruktur kann beispielsweise mehrere bezogen auf die Längsachse des Rohrstutzens im Abstand zueinander angeordnete Ringnuten ausbilden, die den Rohrstutzen in Umfangsrichtung umgeben. Ein mit dem Rohrstutzen lösbar verbindbares Schnellkupplungsteil kann bezogen auf die Längsachse des Rohrstutzens in axialer Richtung auf den Rohrstutzen aufgesetzt werden, wobei das Schnellkupplungsteil ein Außenrohrstück und ein koaxial zu diesem ausgerichtetes Innenrohrstück aufweist. Das Außenrohrstück kann auf den Rohrstutzen des Anschlusselements aufgesteckt werden, wobei das Innenrohrstück in den Rohrstutzen eintaucht unter Zwischenlage eines Dichtrings, der an einer Stirnseite des Rohrstutzens zur Anlage gelangt. Zur axialen Festlegung des Schnellkupplungsteils am Rohrstutzen kann eine elastisch aufspreizbare und quer zur Längsachse des Rohrstutzens auf das Außenrohrstück aufsetzbare Sicherungsmanschette zum Einsatz kommen, die auf ihrer Innenseite ein Arretierungselement aufweist. Beim Aufsetzen der Sicherungsmanschette auf das Außenrohrstück durchgreift das Arretierungselement eine Durchbrechung des Außenrohrstücks und taucht in eine der Ringnuten des Rohrstücks ein. Dem Außen und Innenrohrstück abgewandt weist das Schnellkupplungsteil einen Anschlussnippel auf, an den eine Hydraulikleitung, beispielsweise ein Hydraulikschlauch, angeschlossen werden kann.

Der Einsatz eines Anschlusselements, das einen Rohrstutzen mit einer außenseitig angeordneten Aufnahmestruktur ausbildet, ermöglicht es, das Anschlusselement mit einer Hydraulikleitung lösbar zu verbinden, ohne dass spezielles Werkzeug zum Einsatz kommen muss und ohne dass auf das Anschlusselement eine hohe mechanische Belastung, insbesondere ein hohes Drehmoment, ausgeübt wird.

Von besonderem Vorteil ist es, wenn in das Tankgehäuse ein Filtersystem integriert ist. Das Filtersystem kann beispielsweise als Saugfilter, als Rücklauffilter oder auch als Rücklaufsaugfilter ausgestaltet sein.

Bei einer besonders bevorzugten Ausgestaltung der Erfindung weist das Tankgehäuse eine Filterzugangsöffnung auf, die von einem Randabschnitt des Tankgehäuses umgeben ist, wobei am Randabschnitt ein über die Filterzugangsöffnung in das Tankgehäuse eingesetztes beispielsweise topfförmiges Filtergehäuse festgelegt ist, das als Kunststoffkörper in einem Spritzgießverfahren hergestellt ist. Eine derartige Ausgestaltung ermöglicht auf vorteilhafte Weise die Integration eines Filtersystems in das Tankgehäuse, indem ein Filtergehäuse über eine Filterzugangsöffnung in das Tankgehäuse eingesetzt und an diesem festgelegt wird. In das Filtergehäuse kann ein Filterelement zum Filtrieren der Hydraulikflüssigkeit eingesetzt werden. Das Filtergehäuse ist als Kunststoffkörper in einem Spritzgießverfahren hergestellt.

Bevorzugt ist das Filtergehäuse als einteiliger Kunststoffkörper im Spritzgießverfahren hergestellt.

Zur Herstellung des Filtergehäuses kann ein faserverstärktes, insbesondere ein glasfaserverstärktes Kunststoffmaterial zum Einsatz kommen. Das Filtergehäuse kann über die Filterzugangsöffnung in das Tankgehäuse eingesetzt und anschließend an einem die Filterzugangsöffnung umgebenden Randabschnitt des Tankgehäuses festgelegt werden.

Der die Filterzugangsöffnung umgebende Randabschnitt ist bevorzugt als im Tankgehäuse angeordneter Stützring ausgestaltet. Der Stützring kann an einer in das Tankgehäuse eintauchenden Innenwand angeordnet sein.

Das Filtergehäuse ist erfindungsgemäß mit dem die Filterzugangsöffnung umgebenden Randabschnitt verschweißt. Das Filtergehäuse hat hierbei nicht nur die Funktion, ein Filterelement aufzunehmen, sondern aufgrund der Verschweißung erhöht das Filtergehäuse auch die mechanische Stabilität des Tankgehäuses im Bereich der Filterzugangsöffnung.

Nach dem Einsetzen eines Filterelements in das Filtergehäuse kann die Filterzugangsöffnung mittels eines Deckels verschlossen werden. Günstigerweise ist der Deckel mit dem Tankgehäuse verschraubbar.

Das Filtergehäuse ist bei einer vorteilhaften Ausführungsform der Erfindung aus einem faserverstärkten Polyamidmaterial geformt, insbesondere aus einem glasfaserverstärkten Polyamidmaterial.

Von Vorteil ist es, wenn das Tankgehäuse ein Filterkopfteil ausbildet, an dem mindestens eine Anschlussöffnung angeordnet ist und das den die Filterzugangsöffnung umgebenden Randabschnitt aufweist.

Bei einer vorteilhaften Ausführungsform der Erfindung sind am Filterkopfteil mindestens eine erste Anschlussöffnung in Form einer Tankeinlassöffnung und mindestens eine zweite Anschlussöffnung in Form einer Tankauslassöffnung angeordnet. An der mindestens einen Tankeinlassöffnung und an der mindestens einen Tankauslassöffnung ist jeweils ein Anschlusselement angeordnet, das wie voranstehend bereits erläutert einen im Spritzgießverfahren hergestellten Kunststoffkörper aufweist und mit dem Filterkopfteil verschweißt ist. Insbesondere kann vorgesehen sein, dass die Anschlusselemente jeweils als einteilige, in einem Spritzgießverfahren hergestellte Kunststoffkörper ausgestaltet sind.

Das in das Filtergehäuse einsetzbare Filterelement weist bei einer vorteilhaften Ausführungsform der Erfindung eine obere und eine untere Endscheibe auf, die zwischen sich ein hohlzylinderförmiges Filtermedium aufnehmen, wobei die obere Endscheibe einen Innenraum des Filterkopfteils in einen Einlassraum für zu filtrierende Hydraulikflüssigkeit und einen Auslassraum für gefilterte Hydraulikflüssigkeit unterteilt, wobei die am Filterkopfteil angeordnete mindestens eine Tankeinlassöffnung in den Einlassraum mündet und wobei die am Filterkopfteil angeordnete mindestens eine Tankauslassöffnung in den Auslassraum mündet. Bei einer derartigen Ausgestaltung unterteilt die obere Endscheibe des in das Filtergehäuse einsetzbaren Filterelements den Innenraum des Filterkopfteilteils in einen Einlassraum und in einen Auslassraum. Der Einlassraum steht mit mindestens einer am Filterkopfteil angeordneten Tankeinlassöffnung in Strömungsverbindung und der Auslassraum steht mit mindestens einer am Filterkopfteil angeordneten Tankauslassöffnung in Strömungsverbindung. Hydraulikflüssigkeit kann vom Einlassraum durch das Filtermedium des Filterelements hindurch zum Auslassraum gelangen, wobei es beim Durchströmen des Filtermediums gefiltert wird. Das Filterkopfteil kann eine verhältnismäßig einfache Geometrie aufweisen, es kann beispielsweise zylinderförmig ausgestaltet sein. Das Filterkopfteil bildet einen Teil des Tankgehäuses aus, das in einem Rotationsflüssigformverfahren hergestellt ist. Die notwendige flüssigkeitsdichte Trennung des Einlassraums vom Auslassraum wird von der oberen Endscheibe des Filterelements übernommen.

Bei einer vorteilhaften Ausführungsform der Erfindung bildet die obere Endscheibe des Filterelements eine schräg zur Längsachse des Filterelements ausgerichtete Trennscheibe aus, die an einer Innenseite des Filterkopfteils flüssigkeitsdicht anliegt. Ein an der Innenseite des Filterkopfteils anliegender, umlaufender Rand der Trennscheibe kann beispielsweise in Form einer Dichtlippe ausgestaltet sein.

In Fällen, in denen am Filterkopfteil mindestens eine Tankeinlassöffnung und mindestens eine Tankauslassöffnung angeordnet ist, ist es im Hinblick auf eine möglichst kompakte Ausgestaltung des Hydrauliktanks von Vorteil, wenn die mindestens eine Tankeinlassöffnung und die mindestens eine Tankauslassöffnung bezogen auf eine Längsachse des Filterelements auf gleicher Höhe angeordnet sind.

Bei einer vorteilhaften Ausführungsform der Erfindung bildet das Filtergehäuse an seinem in das Tankgehäuse eintauchenden Endabschnitt einen Aufnahmeraum für ein Einlassventil und/oder ein Auslassventil aus. Über das Auslassventil kann gefilterte Hydraulikflüssigkeit aus dem Filtergehäuse heraus in den Innenraum des Tankgehäuses gelangen, und über das Einlassventil kann Hydraulikflüssigkeit dem Innenraum des Tankgehäuses entnommen werden, wobei die Hydraulikflüssigkeit anschließend über das Filtergehäuse zu der am Filterkopfteil angeordneten Tankauslassöffnung gelangt.

Im Aufnahmeraum kann auch ein Siebelement angeordnet sein. Mit Hilfe des Siebelements lassen sich grobe Verunreinigungen zurückhalten.

Es kann vorgesehen sein, dass das Filtergehäuse an seinem in das Tankgehäuse eintauchenden Endabschnitt einen Stützboden aufweist mit einer Auslassöffnung, die von einem federelastisch in Richtung auf die Auslassöffnung vorgespannten Auslassventilelement des Auslassventils verschließbar ist, wobei das Auslassventilelement eine Einlassöffnung aufweist, die von einem Einlassventilelement des Einlassventils verschließbar ist. Strömt über mindestens

eine am Filterkopfteil angeordnete Tankeinlassöffnung eine größere Menge an Hydraulikflüssigkeit in das Filtergehäuse ein, als über mindestens eine am Filterkopfteil angeordnete Tankauslassöffnung aus dem Filtergehäuse herausströmt, so kann sich im Filtergehäuse ein Überdruck ausbilden. Überschreitet der im Filtergehäuse herrschende Druck der Hydraulikflüssigkeit einen vorgegebenen Maximalwert, der beispielsweise 0,2 bar oder 0,3 bar betragen kann, so öffnet das Auslassventil, indem das Auslassventilelement entgegen der auf ihn einwirkenden federelastischen Rückstellkraft von der Auslassöffnung des Filtergehäuses abhebt, so dass Hydraulikflüssigkeit über die Auslassöffnung aus dem Filtergehäuse in den Innenraum des Tankgehäuses strömen kann. Wird über die mindestens eine am Filterkopfteil angeordnete Tankauslassöffnung eine größere Menge an Hydraulikflüssigkeit aus dem Filtergehäuse abgesaugt, als über die mindestens eine am Filterkopfteil angeordnete Tankeinlassöffnung in das Filtergehäuse hineinströmt, so kann sich im Filtergehäuse ein Unterdruck ausbilden, unter dessen Wirkung das Einlassventilelement von der Einlassöffnung abhebt und somit die Einlassöffnung freigibt, so dass über die Einlassöffnung Hydraulikflüssigkeit aus dem Innenraum des Tankgehäuses in das Filtergehäuse strömen kann.

Von Vorteil ist es, wenn sich das Filterelement an einem in das Tankgehäuse eintauchenden Endabschnitt des Filtergehäuses abstützt. Die beim Durchströmen von Hydraulikflüssigkeit auf das Filterelement in axialer Richtung einwirkende mechanische Belastung wird bei einer derartigen Ausgestaltung vom Filtergehäuse aufgenommen, das bevorzugt mit dem Tankgehäuse verschweißt ist.

Um die mechanische Stabilität des Tankgehäuses zu erhöhen, bildet das Tankgehäuse bei einer vorteilhaften Ausgestaltung der Erfindung mindestens eine Traverse aus, die sich von einer ersten Tankgehäusewand zu einer gegenüberliegenden zweiten Tankgehäusewand erstreckt und hohl ausgestaltet ist. Die mindestens eine Traverse durchgreift den Innenraum des Tankgehäuses und bildet eine einstückige mechanische Verbindung zwischen zwei einander
gegenüberliegenden Tankgehäusewänden. Dies verleiht dem Tankgehäuse eine besonders hohe mechanische Stabilität.

Das Tankgehäuse bildet günstigerweise eine Belüftungsöffnung aus, an der ein Belüftungsfilter angeordnet ist. Bevorzugt ist in das Belüftungsfilter ein bidirektionales Ventil integriert. Über das Belüftungsfilter und das integrierte Ventil kann beim Befüllen des Hydrauliktanks Luft aus dem Tankgehäuse entweichen, sobald ein vorgegebener Maximaldruck im Hydrauliktank überschritten wird, und bei der Entnahme von Hydraulikflüssigkeit kann über das Belüftungsfilter und das integrierte Ventil Luft in das Tankgehäuse einströmen. Die einströmende Luft wird mittels des Belüftungsfilters gefiltert.

Bevorzugt ist an mindestens einer Anschlussöffnung des Tankgehäuses ein in das Tankgehäuse eintauchendes Rohrstück gehalten. Bevorzugt durchgreift das Rohrstück die Anschlussöffnung.

Günstig ist es, wenn das Rohrstück fluchtend zu einem an der Anschlussöffnung angeordneten und mit dem Tankgehäuse verschweißten Anschlusselement ausgerichtet ist. Über das Rohrstück kann der Hydrauliktank mit Flüssigkeit befüllt werden. Alternativ oder ergänzend kann vorgesehen sein, dass Hydraulikflüssigkeit dem Tankgehäuse über das Rohrstück entnommen werden kann. Das Rohrstück kann somit eine Rücklaufleitung ausbilden, über die Hydraulikflüssigkeit in das Tankgehäuse einströmt, oder auch eine Saugleitung, über die Hydraulikflüssigkeit dem Tankgehäuse entnommen werden kann. In beiden Fällen lässt sich eine strömungsgünstige Ausgestaltung realisieren.

Bevorzugt ist an mehreren Anschlussöffnungen des Tankgehäuses, die über das Tankgehäuse verteilt angeordnet sind, ein Rohrstück gehalten, das in das Tankgehäuse eintaucht und die Entnahme und/oder die Zufuhr von Hydraulikflüssigkeit ermöglicht.

Bei einer vorteilhaften Ausgestaltung des erfindungsgemäßen Hydrauliktanks ist ein innerhalb des Tankgehäuses angeordneter Bereich des Rohrstücks als Schutzsieb ausgestaltet, insbesondere als zylindrisches oder kegelstumpfförmiges Schutzsieb.

Günstig ist es, wenn das Rohrstück mit dem Tankgehäuse verschweißt ist.

Es kann vorgesehen sein, dass eine Anschlussöffnung des Tankgehäuses eine Stufe ausbildet, an der ein in das Tankgehäuse eintauchendes Rohrstück mit einer radialen Erweiterung anliegt. Im Bereich der radialen Erweiterung kann das Rohrstück mit dem Tankgehäuse verschweißt sein.

Das Rohrstück ist günstigerweise in einem Spritzgießverfahren hergestellt.

Bevorzugt ist das Rohrstück aus einem faserverstärkten Kunststoffmaterial hergestellt, insbesondere aus einem glasfaserverstärkten Kunststoffmaterial. Es kann beispielsweise vorgesehen sein, dass das Rohrstück aus einem faserverstärkten, insbesondere glasfaserverstärkten Polyamidmaterial hergestellt ist.

Alternativ oder ergänzend kann vorgesehen sein, dass mindestens ein Rohrstück aus Metall gefertigt ist.

Zur Integration eines Filtersystems wird das Tankgehäuse beim erfindungsgemäßen Verfahren im Rotationsflüssigformverfahren mit einem Filterkopfteil ausgestaltet, das mindestens eine Anschlussöffnung aufweist, beispielsweise zumindest eine Tankeinlassöffnung und/oder zumindest eine Tankauslassöffnung, und das eine Filterzugangsöffnung umgibt, und ein beispielsweise topfförmiges Filtergehäuse wird als vorzugsweise einteilig ausgestalteter Kunststoffkörper in einem Spritzgießverfahren hergestellt, über die Filterzugangsöffnung in das Tankgehäuse eingesetzt und an einem die Filterzugangsöffnung umgebenden Randabschnitt des Filterkopfteils festgelegt, und ein Filterelement wird in das Filtergehäuse eingesetzt. In das Tankgehäuse wird somit ein Filtergehäuse eingesetzt, in das wiederum ein Filterelement eingesetzt wird zum Filtern der Hydraulikflüssigkeit. Das Filtergehäuse ist als modulares Bauteil ausgestaltet, das in einem Spritzgießverfahren hergestellt wird. Das Filtergehäuse kann ebenso wie die zum Einsatz kommenden Anschlusselemente in großer Stückzahl kostengünstig hergestellt und für unterschiedlichste Tankgehäuse verwendet werden.

Erfindungsgemäß wird das über die Filterzugangsöffnung in das Tankgehäuse eingesetzte Filtergehäuse mit dem die Filterzugangsöffnung umgeben Randabschnitt verschweißt, günstigerweise mit Hilfe eines Laserstrahls. Das Verschweißen des Filtergehäuses mit dem Randabschnitt erlaubt die Aufnahme axialer Kräfte, die beim Durchströmen von Hydraulikflüssigkeit auf das im Filtergehäuse positionierte Filterelement einwirken.

Die nachfolgende Beschreibung einer vorteilhaften Ausführungsform der Erfindung dient im Zusammenhang mit der Zeichnung der näheren Erläuterung. Es zeigen:

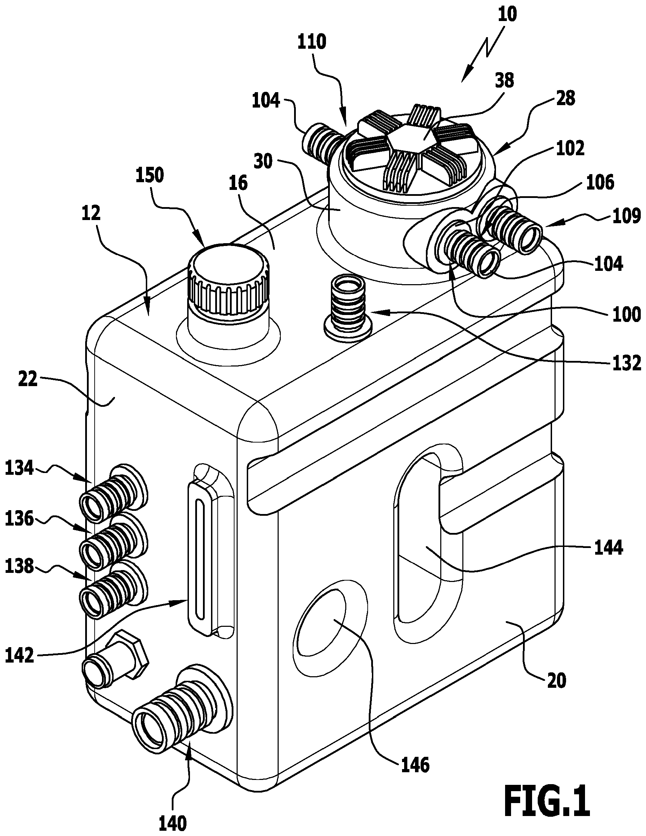

- Figur 1:: eine perspektivische Darstellung eines Hydrauliktanks;

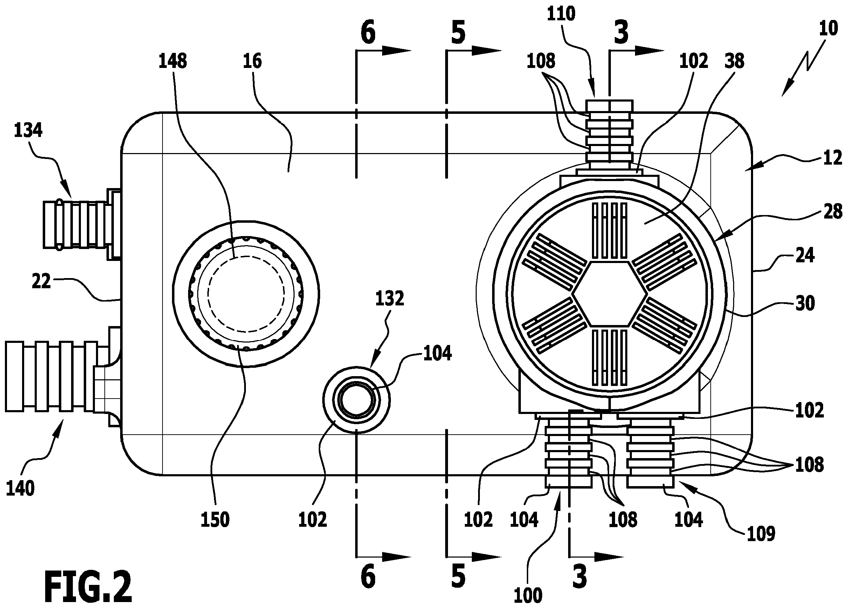

- Figur 2:: eine Draufsicht auf den Hydrauliktank aus Figur 1;
- Figur 3:: eine Schnittansicht des Hydrauliktanks längs der Linie 3 - 3 in Figur 2;

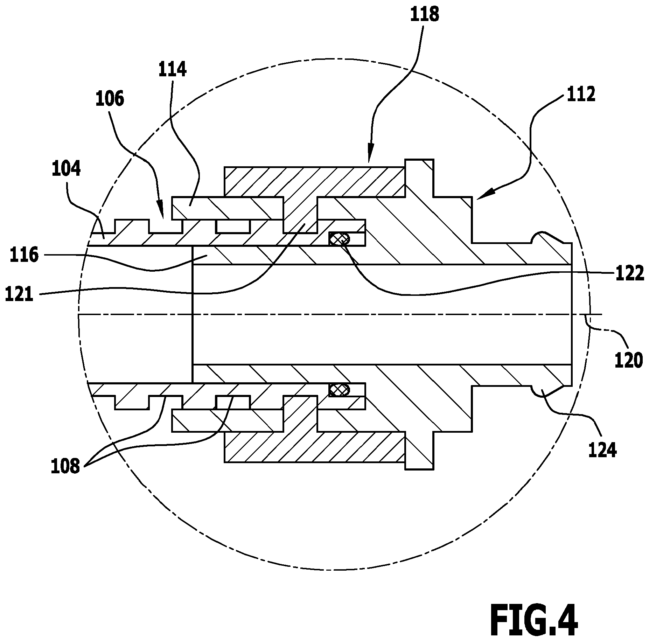

- Figur 4:: eine vergrößerte Darstellung von Detail A aus Figur 3;
- Figur 5:: eine Schnittansicht des Hydrauliktanks längs der Linie 5 - 5 in Figur 2;

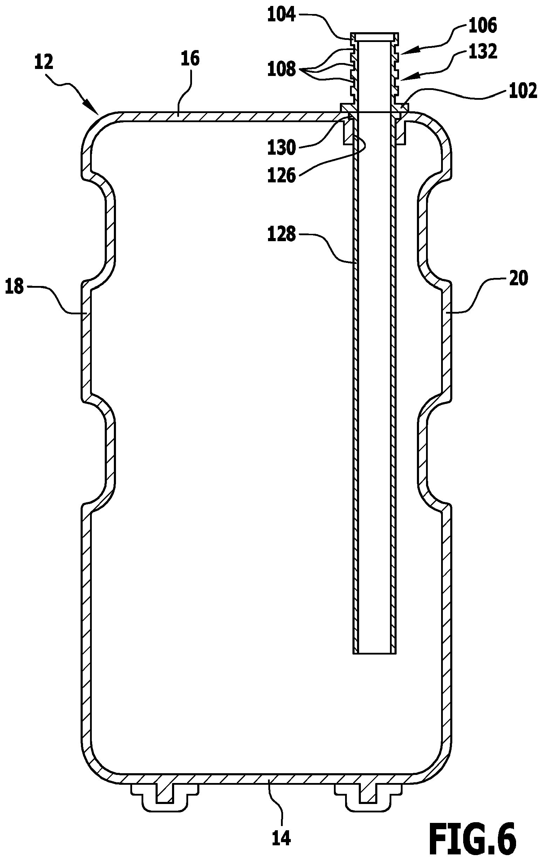

- Figur 6:: eine Schnittansicht des Hydrauliktanks längs der Linie 6 - 6 in Figur 2.

In der Zeichnung ist eine vorteilhafte Ausführungsform eines erfindungsgemäßen Hydrauliktanks schematisch dargestellt, der insgesamt mit dem Bezugszeichen 10 belegt ist. Der Hydrauliktank 10 weist ein Tankgehäuse 12 auf, das als einteiliger Kunststoffhohlkörper in einem Rotationsflüssigformverfahren aus einem Polyamidmaterial, vorzugsweise aus einem faserverstärkten Polyamidmaterial, hergestellt ist. Das Tankgehäuse 12 ist bei der dargestellten Ausführungsform im Wesentlichen quaderförmig ausgebildet und umfasst eine Bodenwand 14, eine Deckenwand 16, eine Rückwand 18, eine Stirnwand 20 sowie eine erste Seitenwand 22 und eine zweite Seitenwand 24, die einen Innenraum 26 des Tankgehäuses umgeben.

In das Tankgehäuse 12 ist ein nachfolgend näher erläutertes Filtersystem 27 integriert, das in der dargestellten Ausführungsform ein Rücklaufsaugfilter ausbildet. Alternativ könnte das Filtersystem 27 auch als Rücklauffilter oder als Saugfilter ausgestaltet sein. Derartige Filterausführungen sind dem Fachmann an sich bekannt.

Zur Integration des Filtersystems 27 in das Tankgehäuse 12 bildet die Deckenwand 16 in der dargestellten Ausführungsform ein doppelwandiges, im Wesentlichen zylindrisches Filterkopfteil 28 aus mit einer nach Art eines Kragens in die der Bodenwand 14 abgewandte Richtung nach oben ausgerichteten Außenwand 30 und einer in den Innenraum 26 eintauchenden Innenwand 32, die an ihrem in den Innenraum 26 eintauchenden Ende einen radial nach innen gerichteten Stützring 34 ausbildet. Das Filterkopfteil 28 umgibt eine Filterzugangsöffnung 36 und kann mit Hilfe eines Deckels 38 unter Zwischenlage eines Dichtrings 40 flüssigkeitsdicht verschlossen werden. Der Deckel 38 weist hierzu ein Außengewinde auf, das in ein komplementär ausgestaltetes Innengewinde der Innenwand 32 eingeschraubt werden kann.

Über die Filterzugangsöffnung 36 ist ein topfförmiges Filtergehäuse 46 in den Innenraum 26 des Tankgehäuses 12 eingesetzt, wobei sich das Filtergehäuse 26 mittels eines Stützflansches 47 am Stützring 34 des Filterkopfteils 28 abstützt. Der Stützring 34 bildet einen die Filterzugangsöffnung 36 in Umfangsrichtung umgebenden Randabschnitt des Tankgehäuses 12.

Das Filtergehäuse 46 ist in einem Spritzgießverfahren aus einem faserverstärkten Polyamidmaterial hergestellt und im Bereich des Stützrings 34 mit Hilfe eines Laserstrahls mit dem Tankgehäuse 12 verschweißt. Im dargestellten Ausführungsbeispiel ist das Filtergehäuse 46 im Spritzgießverfahren als einteiliger Kunststoffkörper hergestellt.

Das Filtergehäuse 46 bildet an seinem in das Tankgehäuse 12 eintauchenden Endabschnitt 48 einen Aufnahmeraum 50 aus, der ein Auslassventil 52 und ein Einlassventil 54 aufnimmt. Das Auslassventil 52 und das Einlassventil 54 werden in den Aufnahmeraum 50 eingefügt, bevor das Filtergehäuse 46 in das Tankgehäuse 12 eingesetzt und mit diesem verschweißt wird.

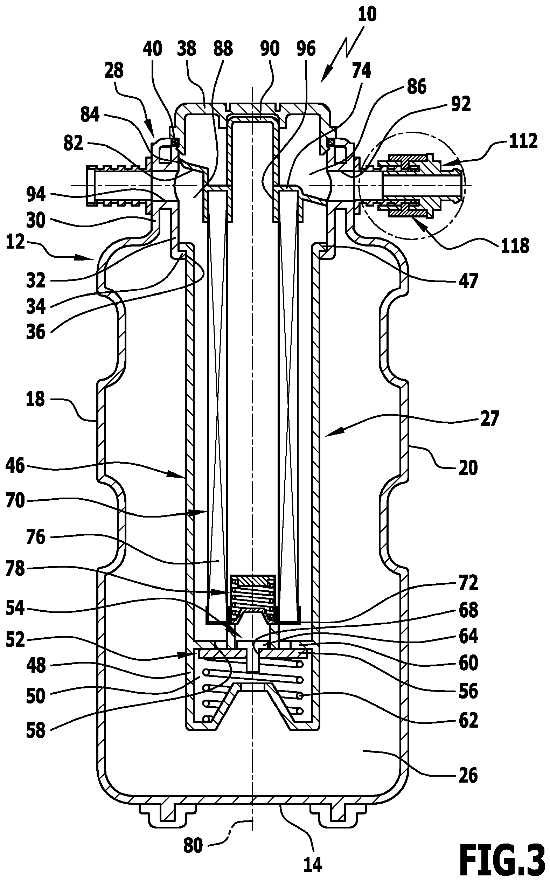

Das Auslassventil 52 weist ein Auslassventilelement 56 auf, das in der in Figur 3 dargestellten Schließstellung eine Auslassöffnung 58 flüssigkeitsdicht verschließt. Die Auslassöffnung 58 ist an einer Stützwand 60 des Filtergehäuses 46 angeordnet. Mittels einer Rückstellfeder 62 wird das Auslassventilelement 56 gegen einen Rand der Auslassöffnung 58 vorgespannt.

Das Einlassventil 54 weist ein Einlassventilelement 64 auf, das in der in Figur 3 dargestellten Schließstellung eine zentrale Einlassöffnung 68 des Auslassventilelements 56 verschließt.

Bildet sich innerhalb des Filtergehäuses 46 ein vorgegebener Überdruck von beispielsweise 0,3 bar aus, so hebt das Auslassventilelement 56 entgegen der federelastischen Rückstellkraft der Rückstellfeder 62 von der Auslassöffnung 58 ab und gibt dadurch einen Strömungsweg frei, über den im Filtergehäuse 46 befindliche Hydraulikflüssigkeit über die Auslassöffnung 58 aus dem Filtergehäuse 46 in den Innenraum 26 strömen kann. Bildet sich innerhalb des Filtergehäuses 46 ein Unterdruck aus, so hebt das Einlassventilelement 64 von der Einlassöffnung 68 ab, so dass Hydraulikflüssigkeit vom Innenraum 26 über die Einlassöffnung 68 in das Filtergehäuse 46 strömen kann.

In das Filtergehäuse 46 ist über die Filterzugangsöffnung 36 ein Filterelement 70 eingesetzt, das eine untere Endscheibe 72 und eine obere Endscheibe 74 aufweist sowie ein zwischen der unteren Endscheibe 72 und der oberen Endscheibe 74 angeordnetes, in der dargestellten Ausführungsform sternförmig gefaltetes Filtermedium 76. Das Filtermedium 76 bildet einen Hohlzylinder aus. An der unteren Endscheibe 72 ist ein BypassVentil 78 angeordnet.

Die obere Endscheibe 74 bildet eine schräg zur Längsachse 80 des Filterelements 70 ausgerichtete Trennscheibe 82 aus, die an ihrem Umfangsrand als Dichtlippe 84 ausgestaltet ist. Die Dichtlippe 84 liegt an der Innenseite der Innenwand 32 des Filterkopfteils 28 flüssigkeitsdicht an und unterteilt den von der Innenwand 32 umgebenen Innenraum des Filterkopfteils 28 in einen oberhalb der Trennscheibe 82 angeordneten Einlassraum 86 und einen unterhalb der Trennscheibe 82 angeordneten Auslassraum 88. Ein Haltebügel 90 ist an die obere Endscheibe 72 angeformt und erstreckt sich bis zum Deckel 38, an dem der Haltebügel 90 anliegt. Das Filterelement 70 stützt sich einerseits an der Stützwand 60 des Filtergehäuses 46 und andererseits am Deckel 38 ab.

Das Tankgehäuse 12 weist mehrere Anschlussöffnungen auf, wobei eine erste Anschlussöffnung eine am Filterkopfteil 28 angeordnete Tankeinlassöffnung 92 ausbildet, die in den Einlassraum 86 mündet, und wobei eine zweite Anschlussöffnung eine am Filterkopfteil 28 angeordnete Tankauslassöffnung 94 ausbildet, die in den Auslassraum 88 mündet. Außerdem ist am Filterkopfteil 28 noch eine weitere Anschlussöffnung angeordnet, die ebenfalls eine Tankeinlassöffnung ausbildet und in der Zeichnung nicht dargestellt ist. Bezogen auf die Längsachse 80 des Filterelements 70 sind die Tankeinlassöffnungen und die Tankauslassöffnung 94 auf gleicher Höhe angeordnet.

Über die Tankeinlassöffnungen kann Hydraulikflüssigkeit in den Einlassraum 86 einströmen. Über eine zentrale Durchbrechung 96 der oberen Endscheibe 74 gelangt die einströmende Hydraulikflüssigkeit zum Filtermedium 76 und kann dieses in radialer Richtung von innen nach außen durchströmen, wobei die Hydraulikflüssigkeit gefiltert wird. Die gefilterte Hydraulikflüssigkeit kann anschließend über den Auslassraum 88 und die Tankauslassöffnung 94 dem Tankgehäuse 12 entnommen werden. Übersteigt der Druck der gefilterten Hydraulikflüssigkeit innerhalb des Filtergehäuses 46 den voranstehend bereits erwähnten Maximaldruck von beispielsweise 0,3 bar, so öffnet das Auslassventil 52 und die gefilterte Hydraulikflüssigkeit kann über die Auslassöffnung 58 in den Innenraum 26 des Tankgehäuses 12 gelangen. Bildet sich im Filtergehäuse 46 ein Unterdruck aus, so kann Hydraulikflüssigkeit aus dem Innenraum 26 des Tankgehäuses 12 über die Einlassöffnung 68 zum Auslassraum 88 gelangen und über die Tankauslassöffnung 94 aus dem Tankgehäuse 12 herausströmen.

Auf der Außenseite des Tankgehäuses 12 ist an der Tankeinlassöffnung 92 ein erstes Anschlusselement 100 angeordnet, das ein vorgefertigtes, modulares Bauteil ausbildet und bevorzugt in seiner Gesamtheit als Kunststoffkörper in einem Spritzgießverfahren hergestellt ist. Im dargestellten Ausführungsbeispiel ist das erste Anschlusselement als einteiliger Kunststoffkörper ohne metallische Teilkomponente hergestellt. Das Anschlusselement 100 weist einen Anschlussflansch 102 auf, der mittels eines Lasers mit dem Tankgehäuse 12 verschweißt ist. An den Anschlussflansch 102 schließt sich ein Rohrstutzen 104 des ersten Anschlusselements 100 an, der nach außen vom Tankgehäuse 12 absteht und außenseitig eine Aufnahmestruktur 106 ausbildet, die im dargestellten Ausführungsbeispiel in Form mehrerer, den Rohrstutzen 104 in Umfangsrichtung umgebender Ringnuten 108 ausgestaltet ist. Ein weiteres Anschlusselement 109 ist an der in der Zeichnung nicht dargestellten weiteren Tankeinlassöffnung angeordnet und ist identisch ausgestaltet wie das erste Anschlusselement 100.

Ein zweites Anschlusselement 110 ist ebenfalls identisch ausgebildet wie das erste Anschlusselement 100 und ist an der Tankauslassöffnung 94 angeordnet. Auch das zweite Anschlusselement 110 ist im dargestellten Ausführungsbeispiel als einteiliger Kunststoffkörper ohne metallische Teilkomponente in einem Spritzgießverfahren hergestellt und mit dem Tankgehäuse 12 mittels eines Laserstrahls verschweißt.

Das erste Anschlusselement 100 ist ebenso wie das zweite Anschlusselement 110 und das weitere Anschlusselement 109 mit einem Schnellkupplungsteil 112 ohne Einsatz eines Spezialwerkzeugs lösbar verbindbar. Das Schnellkupplungsteil 112 weist ein Außenrohrstück 114 und ein koaxial zu diesem ausgerichtetes Innenrohrstück 116 auf. Mit Hilfe einer elastisch aufspreizbaren Sicherungsmanschette 118 ist das Schnellkupplungsteil 112 mit dem Anschlusselement 100 bzw. 110 verbindbar. Das Schnellkupplungsteil 112 bildet ein einteiliges Kunststoffformteil aus.

In Figur 3 ist das Schnellkupplungsteil 112 auf den Rohrstutzen 104 des ersten Anschlusselements 100 aufgesteckt, wobei das Innenrohrstück 116 in den Rohrstutzen 104 eintaucht und das Außenrohrstück 114 den Rohrstutzen 104 umgibt. Nach dem Aufsetzen des Außenrohrstücks 114 auf den Rohrstutzen 104 kann die elastisch aufspreizbare Sicherungsmanschette 118 in einer senkrecht zur Längsachse 120 des Rohrstutzens 104 ausgerichteten Montagerichtung auf das Außenrohrstück 114 aufgesetzt werden, wobei ein innenseitig an der Sicherungsmanschette 118 angeordnetes Arretierungselement 121 eine Durchbrechung des Außenrohrstücks 114 durchgreift und in eine der Ringnuten 108 eintaucht. Auf diese Weise ist das Schnellkupplungsteil 112 am Rohrstutzen 104 festgelegt. Der Rohrstutzen 104 trägt an seiner dem Anschlussflansch 102 abgewandten Stirnseite einen Dichtring122, der sicherstellt, dass das Schnellkupplungsteil 112 flüssigkeitsdicht mit dem Rohrstutzen 104 verbunden ist.

Das Schnellkupplungsteil 112 weist dem Rohrstutzen 104 abgewandt einen Anschlussnippel 124 auf, an den eine Hydraulikleitung, beispielsweise ein Hydraulikschlauch, angeschlossen werden kann.

Im Abstand zum Filterkopfteil 28 weist das Tankgehäuse 12 an der Deckenwand 16 eine dritte Anschlussöffnung 126 auf, die von einem Rohrstück 128 durchgriffen ist, das in den Innenraum 26 des Tankgehäuses 12 eintaucht und sich mit einer endseitigen radialen Erweiterung 130 an einer Stufe der dritten Anschlussöffnung 126 abstützt. Das Rohrstück 128 ist im dargestellten Ausführungsbeispiel als einteiliger Kunststoffkörper in einem Spritzgießverfahren hergestellt und im Bereich der radialen Erweiterung 130 mittels eines Laserstrahls mit dem Tankgehäuse 12 verschweißt.

Fluchtend zum Rohrstück 128 ist an der dritten Anschlussöffnung 126 ein drittes Anschlusselement 132 angeordnet, das identisch ausgebildet ist wie die voranstehend erläuterten Anschlusselemente 100, 109 und 110 und das ebenfalls einen Anschlussflansch aufweist, der mittels eines Laserstrahls mit dem Tankgehäuse 12 verschweißt ist. Auch an das dritte Anschlusselement 132 kann mittels eines Schnellkupplungsteils 112 eine Hydraulikleitung flüssigkeitsdicht angeschlossen werden.

An der ersten Seitenwand 22 weist das Tankgehäuse 12 weitere Anschlussöffnungen auf, an denen jeweils ein Anschlusselement 134, 136, 138 bzw. 140 angeordnet ist. Auch die Anschlusselemente 134, 136, 138 und 140 sind im dargestellten Ausführungsbeispiel als einteilige Kunststoffkörper ohne metallische Teilkomponente in einem Spritzgießverfahren hergestellt und mittels eines Laserstrahls mit dem Tankgehäuse 12 verschweißt.

An der ersten Seitenwand 22 ist außerdem eine Ölstandsanzeige 142 angeordnet, an der der Benutzer den Ölstand ablesen kann.

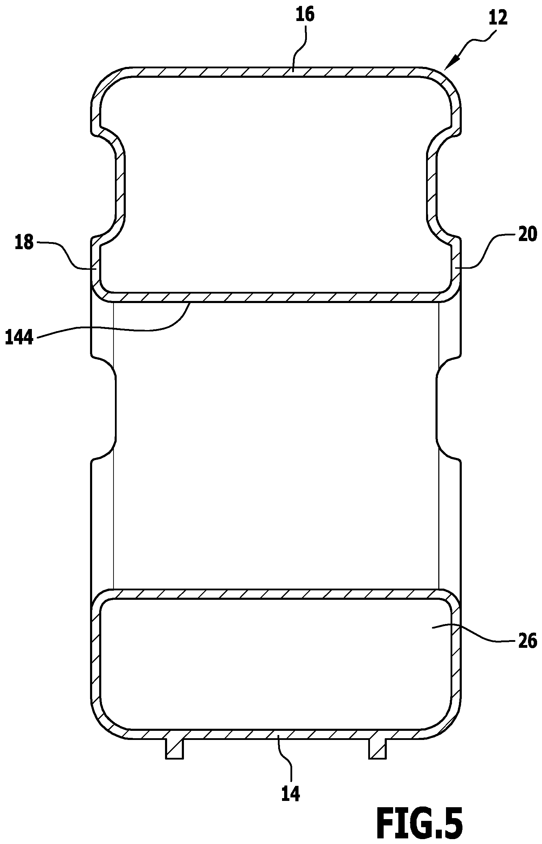

Zur Erhöhung der mechanischen Stabilität bildet das Tankgehäuse 12 eine in Figur 5 dargestellte erste Traverse 144 sowie eine im Abstand zur ersten Traverse 144 angeordnete zweite Traverse 146 aus. Die beiden Traversen 144, 146 sind hohl ausgebildet und erstrecken sich von der Stirnwand 20 bis zur Rückwand 18 und verleihen dadurch dem Tankgehäuse 12 eine hohe mechanische Stabilität. Eine weitere mechanische Verstärkung des Tankgehäuses 12 wird vom Filtergehäuse 46 gebildet, das mit dem Tankgehäuse 12, wie bereits erwähnt, verschweißt ist.

Zum Belüften und Entlüften des Tankgehäuses 12 bildet dieses an der Deckenwand 16 eine Belüftungsöffnung 148 aus, an der ein Belüftungsfilter 150 angeordnet ist. In das Belüftungsfilter 150 ist ein bidirektionales Ventil (in der Zeichnung nicht dargestellt) integriert.

## Patentansprüche

1. Verfahren zum Herstellen eines Hydrauliktanks aus Kunststoff mit einem Tankgehäuse (12) und wenigstens einem Anbauelement, das an dem Tankgehäuse (12) befestigt ist, bei dem
a) das Tankgehäuse (12) durch Rotationsflüssigformen hergestellt oder ein durch Rotationsflüssigformen hergestelltes Tankgehäuse (12) bereitgestellt wird, wobei bei dem Rotationsflüssigformen wenigstens ein flüssiges Ausgangsmaterial in ein Rotationswerkzeug eingebracht wird, das Rotationswerkzeug zum Verteilen des flüssigen Ausgangsmaterials im Rotationswerkzeug bewegt wird und das Tankgehäuse (12) nach dem Verfestigen des Ausgangsmaterials entformt wird,
b) das Anbauelement ein Filtergehäuse (46) umfasst und das Filtergehäuse (46) durch Spritzgießen hergestellt oder das durch Spritzgießen hergestellte Filtergehäuse (46) bereitgestellt wird,
c) das spritzgegossene Filtergehäuse (46) und das rotationsflüssiggeformte Tankgehäuse (12) verbunden werden, wobei
d) das Tankgehäuse (12) beim Rotationsflüssigformen mit einem Filterkopfteil (28) ausgebildet wird, das mindestens eine Anschlussöffnung (92, 94) aufweist und eine Filterzugangsöffnung (36) umgibt, wobei das spritzgegossene Filtergehäuse (46) über die Filterzugangsöffnung (36) in das Tankgehäuse (12) eingesetzt und mit einem die Filterzugangsöffnung (36) umgebenden Randabschnitt (48) des Filterkopfteils (28) verschweißt, insbesondere laserverschweißt, wird.

2. Verfahren nach Anspruch 1
**dadurch gekennzeichnet, dass**
das Anbauelement ein Anschlusselement (100, 110, 132, 134, 136, 138, 140) mit einem Kunststoffkörper, der mit einer Hydraulikleitung verbindbar ist, umfasst.

3. Verfahren nach Anspruch 2
**dadurch gekennzeichnet, dass**
der Kunststoffkörper des Anschlusselements (100, 110, 132, 134, 136, 138, 140) beim Spritzgießen als einteiliger Kunststoffkörper hergestellt wird.

4. Verfahren nach Anspruch 2 oder 3
**dadurch gekennzeichnet, dass**
das komplette Anschlusselement (100, 110, 132, 134, 136, 138, 140) als Kunststoffkörper ohne metallische Teilkomponente hergestellt wird.

5. Verfahren nach einem der vorhergehenden Ansprüche
**dadurch gekennzeichnet, dass**
das Anbauelement, insbesondere das Anschlusselement (100, 110, 132, 134, 136, 138, 140) und/oder das Filtergehäuse (46), einerseits und das Tankgehäuse (12) andererseits durch ein Verbindungsverfahren aus der Gruppe Laserschweißen, Ultraschallschweißen, Rotationsschweißen, Vibrationsschweißen verbunden werden.

6. Verfahren nach einem der vorhergehenden Ansprüche
**dadurch gekennzeichnet, dass**
das flüssige Ausgangsmaterial in mehreren Schritten in das Rotationswerkzeug eingebracht wird.

## Claims

1. A method for producing a hydraulic tank from plastics having a tank housing (12) and at least one attachment element fastened to the tank housing (12), wherein
a) the tank housing (12) is produced by rotational liquid-molding or a tank housing (12) produced by rotational liquid-molding is provided, wherein in the rotational liquid-molding, at least one liquid starting material is introduced into a rotational molding tool, the rotational molding tool is moved to distribute the liquid starting material in the rotational molding tool, and the tank housing (12) is demolded after the starting material has solidified,
b) the attachment element comprises a filter housing (46) and the filter housing is produced by injection molding or the filter housing (46) produced by injection molding is provided,
c) the injection-molded filter housing (46) and the rotational-liquid-molded tank housing (12) are joined, wherein
d) during rotational liquid-molding, the tank housing (12) is formed with a filter head part (28) which has at least one connection opening (92, 94) and surrounds a filter access opening (36), wherein the injection-molded filter housing (46) is inserted into the tank housing (12) via the filter access opening (36) and is welded, in particular laser-welded, to an edge section (48) of the filter head part (28) surrounding the filter access opening (36).

2. The method according to claim 1, **characterized in that** the attachment element comprises a connection element (100, 110, 132, 134, 136, 138, 140) with a plastic body that can be connected to a hydraulic line.

3. The method according to claim 2, **characterized in that** during injection molding, the plastic body of the connection element (100, 110, 132, 134, 136, 138, 140) is produced as a one-piece plastic body.

4. The method according to claim 2 or 3, **characterized in that** the complete connection element (100, 110, 132, 134, 136, 138, 140) is produced as a plastic body without a metallic subcomponent.

5. The method according to any one of the preceding claims, **characterized in that** the attachment element, in particular the connection element (100, 110, 132, 134, 136, 138, 140) and/or the filter housing (46), on the one hand, and the tank housing (12), on the other hand, are joined by a joining method from the group consisting of laser welding, ultrasonic welding, rotation welding, vibration welding.

6. The method according to any one of the preceding claims, **characterized in that** the liquid starting material is introduced into the rotational molding tool in several steps.

## Revendications

1. Procédé de fabrication d'un réservoir hydraulique en matière plastique avec un boîtier de réservoir (12) et au moins un élément rapporté, qui est fixé au boîtier de réservoir (12), pour lequel
a) le boîtier de réservoir (12) est fabriqué par rotomoulage de liquide ou un boîtier de réservoir (12) fabriqué par rotomoulage de liquide est préparé, sachant que lors du rotomoulage de liquide au moins un matériau initial liquide est introduit dans un outil en rotation, l'outil en rotation est déplacé pour la répartition du matériau initial liquide dans l'outil en rotation et le boîtier de réservoir (12) est démoulé après la fixation du matériau initial,
b) l'élément rapporté comprend un boîtier de filtre (46) et le boîtier de filtre (46) est fabriqué par moulage par injection ou le boîtier de filtre (46) fabriqué par moulage par injection est préparé,
c) le boîtier de filtre (46) moulé par injection et le boîtier de réservoir (12) rotomoulé par liquide sont reliés, sachant que
d) le boîtier de réservoir (12) est constitué lors du rotomoulage de liquide avec une pièce de tête de filtre (28), qui comporte au moins une ouverture de raccord (92, 94) et entoure une ouverture d'accès de filtre (36), sachant que le boîtier de filtre (46) moulé par injection est inséré par l'ouverture d'accès de filtre (36) dans le boîtier de réservoir (12) et est soudé à une section de bord (48) de la pièce de tête de filtre (28) entourant l'ouverture d'accès de filtre (36), en particulier soudé au laser.

2. Procédé selon la revendication 1, **caractérisé en ce que** l'élément rapporté comprend un élément de raccord (100, 110, 132, 134, 136, 138, 140) avec un corps de matière plastique, qui peut être relié à une conduite hydraulique.

3. Procédé selon la revendication 2, **caractérisé en ce que** le corps en matière plastique de l'élément de raccord (100, 110, 132, 134, 136, 138, 140) est fabriqué en tant que corps de matière plastique en une pièce par moulage par injection.

4. Procédé selon la revendication 2 ou 3, **caractérisé en ce que** l'élément de raccord (100, 110, 132, 134, 136, 138, 140) complet est fabriqué en tant que corps de matière plastique sans partie de composant métallique.

5. Procédé selon l'une quelconque des revendications précédentes, **caractérisé en ce que** l'élément rapporté, en particulier l'élément de raccord (100, 110, 132, 134, 136, 138, 140) et/ou le boîtier de filtre (46) d'une part et le boîtier de réservoir (12) d'autre part sont reliés par un procédé d'assemblage appartenant au groupe : soudage au laser, soudage aux ultrasons, soudage par rotation, soudage par vibrations.

6. Procédé selon l'une quelconque des revendications précédentes, **caractérisé en ce que** le matériau initial liquide est introduit dans l'outil en rotation en plusieurs étapes.
